# EUROPEAN PATENT SPECIFICATION

(11) **EP 3 578 390 B1**
(45) Date of publication and mention of the grant of the patent: **25.08.2021**
(21) Application number: 17895197.6
(22) Date of filing: 26.10.2017
(51) Int. Cl.: B60C 9/20, B60C 9/00, D07B 1/06, B60C 9/18, B60C 9/22

(54) **TIRE**
REIFEN
PNEU

(30) Priority: 01.02.2017 JP 2017017094
(43) Date of publication of application: 11.12.2019
(73) Proprietor: Sumitomo Electric Tochigi Co., Ltd., Utsunomiya-shi, Tochigi 321-3231 (JP); SUMITOMO ELECTRIC INDUSTRIES, LTD., Osaka-shi, Osaka 541-0041 (JP); Sumitomo Rubber Industries, Ltd., Kobe-shi, Hyogo 651-0072 (JP)
(72) Inventor: MATSUOKA, Akifumi, Utsunomiya-shi Tochigi 321-3231 (JP); SUZUKI, Masumi, Kobe-shi Hyogo 651-0072 (JP); FUJISAWA, Koji, Kobe-shi Hyogo 651-0072 (JP)
(74) Representative: Boult Wade Tennant LLP
(86) International application number: PCT/JP2017/038709
(87) International publication number: WO 2018/142691

(56) References cited:
- EP-A1- 2 918 426
- EP-A2- 0 371 756
- EP-A2- 0 547 041
- JP-A- H07 186 614
- JP-A- 2000 054 280
- JP-A- 2001 001 717
- JP-A- 2015 171 864
- JP-A- 2016 053 474
- JP-A- 2016 075 003
- US-A1- 2010 084 069

## Description

### TECHNICAL FIELD

The present invention relates to a tire.

This application is based upon and claims priority to Japanese Patent Application No. 2017-017094, filed on February 1, 2017.

### BACKGROUND ART

Radial tires are known from Patent Document 1 or the like. The radial tire has a belt layer including a steel cord, and a rubber covering the steel cord. The steel cord is formed by a large number of filaments. Patent Document 1 proposes setting a tenacity per single steel cord, and a ply tenacity to specific values, in order to simultaneously achieve weight saving and strength improvement.

### PRIOR ART DOCUMENTS

### PATENT DOCUMENTS

Patent Document 1: Japanese Laid-Open Patent Publication No. 2001-001717

### DISCLOSURE OF THE INVENTION

A tire according to the present invention is according to claim 1. Preferred embodiments of the invention are defined in the dependent claims.

### BRIEF DESCRIPTION OF DRAWINGS

FIG. 1 is a cross sectional view of a tire according to one embodiment of the present invention.
FIG. 2 is a diagram schematically illustrating a belt layer.
FIG. 3 is a cross sectional view of a steel cord having a 1x4 structure.
FIG. 4 is a diagram schematically illustrating a filament in which a bent part and a non-bent part are repeatedly formed.
FIG. 5 is a diagram illustrating the steel cord having a 1x5 structure.
FIG. 6 is a diagram illustrating a steel cord having a 2+2 structure.
FIG. 7 is a graph illustrating a relationship between a tensile rigidity and a CP value.
FIG. 8 is a graph illustrating a relationship between an interface rigidity and the CP value.
FIG. 9 is a graph illustrating a relationship of a multiplier of the tensile rigidity and number of ends, the interface rigidity, and the CP value.
FIG. 10 is a diagram illustrating a relationship between a T/D value and the CP value.
FIG. 11 is a diagram illustrating a relationship of the T/D value, the CP value, and a value of rubber elastic modulus E*.
FIG. 12 is a diagram illustrating a relationship between an index obtained from a cord weight, and [cord breaking strength] x [number of ends].

### MODE OF CARRYING OUT THE INVENTION

### [Problem To Be Solved By Present Disclosure]

Recently, there are increased demands for weight saving of the tire for the purpose of achieving low fuel consumption. Various methods have been tested for the weight saving of the tire, however, it is necessary to maintain an important performance, which is to provide a comfortable steering stability with the tire.

In order to secure the steering stability, it is regarded important to reduce a bending rigidity of a belt layer of the tire, and it is conceivable to secure the steering stability by increasing the number of filaments, increasing a contact area of the filaments adhered to a rubber, or the like. However, when an attempt is made to secure the steering stability according to these methods, it may be presumed that the cost will increase.

One object of the present disclosure is to provide a tire which is light-weight and has an excellent steering stability, while reducing the cost increase.

### [Effects of Present Disclosure]

According to the present disclosure, it is possible to provide a tire which is light-weight and has an excellent steering stability, while reducing the cost increase.

### [Summary of Embodiments of Present Disclosure]

Summary of embodiments of the present disclosure will be described.
(1) A tire according to the present invention is according to claim 1.
   Because the steel cord of the tire (1) has the 1x4 structure in which 4 filaments are stranded, the cost, lightweight properties, and steering stability are well balanced. In addition, because [tensile rigidity] x [number of ends] is 10,000 N/% or greater and 20,000 N/% or less, and the interface rigidity is 2.5 MPa or higher and 5.0 MPa or lower, it is possible to provide a tire which is light-weight and has an excellent steering stability, while reducing the cost increase.
(2) [Tensile rigidity] x [number of ends] may be 13,000 N/% or greater and 16,000 N/% or less. The cost and tire performance of the tire (2) are well balanced.
(3) The interface rigidity may be 3.5 MPa or higher and 4.5 MPa or lower.
   The cost and tire performance of the tire (3) are well balanced.
(4) The number of ends may be 20 or greater and 60 or less.
   The cost and tire performance of the tire (4) are well balanced. When the number of ends is less than 20, the number of steel cords with respect to the tire becomes too small, and it is difficult to obtain a sufficient tire strength. When the number of ends is greater than 60, a large number of steel cords becomes required, and a productivity of the tire greatly deteriorates.
(5) A diameter of the filaments may be 0.18 mm or greater and 0.42 mm or less.
   The cost and tire performance of the tire (5) are well balanced. When the diameter of the filament is less than 0.18 mm, a large number of filaments becomes required to obtain the required tensile strength, and the cost becomes high. When the diameter of the filament is greater than 0.42 mm, processes become difficult when stranding the filaments, or the like, and the production cost of the tire becomes high.
(6) The tensile strength of the filaments may be 100 N or greater and 450 N or less.
   The cost and tire performance of the tire (6) are well balanced. When the tensile strength of the filaments is less than 100 N, the number of ends for obtaining the required tire strength becomes large, and the productivity of the tire deteriorates. When the tensile strength of the filaments is greater than 450 N, it becomes difficult to process the filaments, and the productivity of the tire deteriorates.
(7) When a center distance of the steel cords in at least two adjacent belt layers along the radial direction is denoted by T, and an average diameter of a virtual circumscribed circle of the steel cords in the 1x4 structure is denoted by D,
   T/D may be 1.25 or greater and 2.25 or less.
   Because T/D is 1.25 or greater and 2.25 or less, the tire (7) can maintain light-weight, and the steering stability is further improved. A preferable range for T/D is 1.3 or greater and 2.0 or less, and a more preferable range for T/D is 1.35 or greater and 1.80 or less.
(8) The average diameter D may be 0.2 mm or greater and 1.5 mm or less.
   According to the tire (8), it is possible to simultaneously achieve the required strength of the steel cords and the excellent tire performance. When the average diameter D is less than 0.2 mm, it is difficult to sufficiently secure the strength of the steel cords. When the average diameter D is greater than 1.5 mm, the rigidity of the steel cords becomes too high and the tire performance deteriorates. A preferable range for the average diameter D is 0.3 mm or greater and 1.2 mm or less.
(9) The center distance T may be 0.4 mm or greater and 1.6 mm or less.
   The tire (9) is light weight and has an excellent durability. When the center distance T is less than 0.4 mm, the amount of rubber filled inbetween the cords is small, and the durability deteriorates. When the center distance T is greater than 1.6 mm, the weight of the tire increases. A preferable range for the center distance T is 0.5 mm or greater and 1.3 mm or less.
(10) The rubber elastic modulus E* of the tire may be 5 MPa or higher and 20 MPa or lower. The tire performance and the productivity of the tire (10) are well balanced. When the rubber elastic modulus E* is less than 5 MPa, the required rigidity for the tire cannot be secured. When the rubber elastic modulus E* is greater than 20 MPa, the productivity deteriorates. A preferable range for the rubber elastic modulus E* of the tire is 7 MPa or higher and 20 MPa or lower, and a more preferable range for the rubber elastic modulus E* of the tire is 8 MPa or higher and 12 MPa or lower.
(11) [Cord breaking strength] x [number of ends] may be 15,000 N or greater and 40,000 N or less. According to the tire (11), the cord weight of the tire can be reduced while securing the required strength. When [cord breaking strength] x [number of ends] is less than 15,000 N, the strength becomes insufficient, and the durability deteriorates. When [cord breaking load] x [number of ends] is greater than 40,000 N, the possibility that the steering stability will deteriorate becomes high.
(12) In a cross sectional view on a plane perpendicular to a longitudinal direction of the steel cords, the rubber may be filled into a center part surrounded by the 4 filaments. According to the tire (12), because gaps among the filaments are also filled by the rubber, the filaments uneasily contact moisture, and rusting of the filaments can be reduced. In addition, because a large contact area can be secured between the filaments and the rubber, a sufficient adhesion can be secured.
(13) Among the 4 filaments, at least 1 filament may be formed with a bent part and a non-bent part repeatedly along the longitudinal direction of the 1 filament. According to the tire (13), gaps can be formed between the filaments by the bent part and the non-bent part. It is possible to cause the rubber to enter the center part surrounded by the filaments through these gaps, and the rubber can easily be filled into the center part surrounded by the filaments.
(14) A repetition pitch of the bent part and the non-bent part of the filament may be 2.2 mm or greater and 7.0 mm or less. According to the tire (14), the bent part and the non-bent part can easily be formed, and the rubber can easily be caused to enter the gaps between the filaments. When an attempt is made to make the repetition pitch less than 2.2 mm, it becomes difficult to form the bent part and the non-bent part, and the effect of causing the rubber to enter the gaps between the filaments deteriorates. When an attempt is made to make the repetition pitch greater than 7.0 mm, a large-scale machine becomes required to form the bent part and the non-bent part, and the production cost increases.
(15) When the filament is placed on a plane, and a height of the filament from this plane to the bent part on a far end of this plane is defined as a bent height, the bent height may be 0.2 times or more and 0.8 times or less with respect to the diameter of the filament. According to the tire (15), the rubber can easily be caused to enter the gaps between the filaments, and the steel cords can easily be manufactured. When the bent height is less than 0.2 times the filament diameter, it is difficult to secure the gaps by the bent part, and the effect of causing the rubber to enter the gaps between the filaments deteriorates. When an attempt is made to make the bent height more than 0.8 times the filament diameter, the bent part may damage other filaments when the filaments are stranded, and breaking of the filament may occur.

### <Details of Embodiments of Present Invention>

Examples of embodiments of the tire according to the present invention will be described in the following, by referring to the drawings. The present invention is not limited to these examples of the embodiments, and is intended to include all modifications within the meaning and scope of the claims presented.

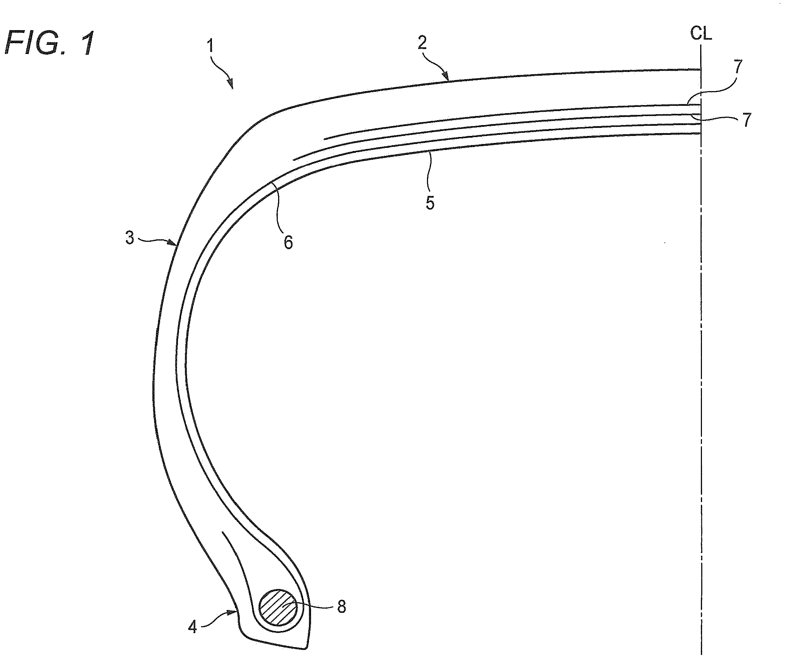

FIG. 1 is a cross sectional view of a tire 1 according to one embodiment of the present invention. As illustrated in FIG. 1, the tire 1 includes a tread part 2, a sidewall part 3, and a bead part 4.

The tread part 2 is a part that makes contact with a road surface. The bead part 4 is provided on an inner diameter side of the tread part 2. The bead part 4 is a part that contacts a rim of a wheel of a vehicle. The sidewall part 3 connects the tread part 2 and the bead part 4. When the tread part 2 receives shock from the road surface, the sidewall part 3 undergoes elastic deformation, and absorbs the shock.

The tire 1 includes an inner liner 5, a carcass 6, a belt layer 7, and a bead wire 8.

The inner liner 5 is made of rubber, and seals a space between the tire 1 and the wheel.

The carcass 6 forms a framework of the tire 1. The carcass is made of an organic fiber, such as polyester, nylon, rayon, or the like, and rubber.

The bead wire 8 is provided in the bead part 4. The bead wire 8 receives a tensile force acting on the carcass 6.

The belt layer 7 clamps the carcass 6, and increases the rigidity of the tread part 2. In the illustrated example, the tire 1 includes 2 belt layers 7. The 2 belt layers 7 are laminated in a radial direction of the tire 1.

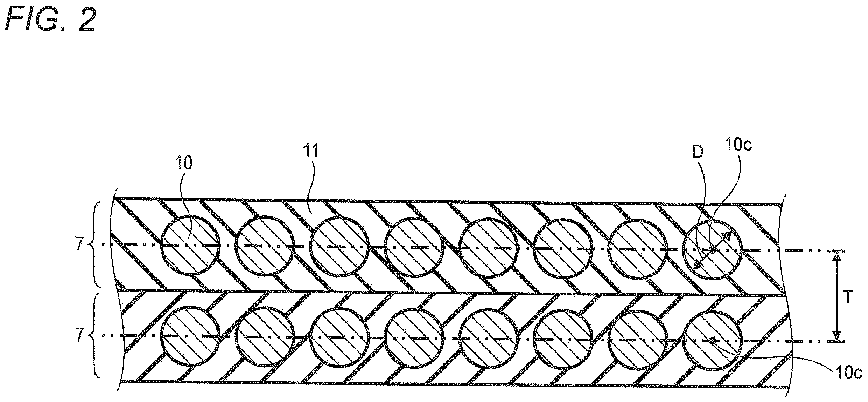

FIG. 2 is a diagram schematically illustrating the 2 belt layers 7. FIG. 2 illustrates a cross section perpendicular to a longitudinal direction of the belt layers 7 (circumferential direction of the tire 1).

As illustrated in FIG. 2, the 2 belt layers 7 are laminated in the radial direction. Each belt layer 7 includes a plurality of steel cords 10, and a rubber 11. The plurality of steel cords 10 are arranged in parallel and are aligned in a row. The rubber 11 covers the plurality of steel cords 10. The entire periphery of each of the plurality of steel cords 10 is covered by the rubber 11. The steel cords 10 are embedded within the rubber 11.

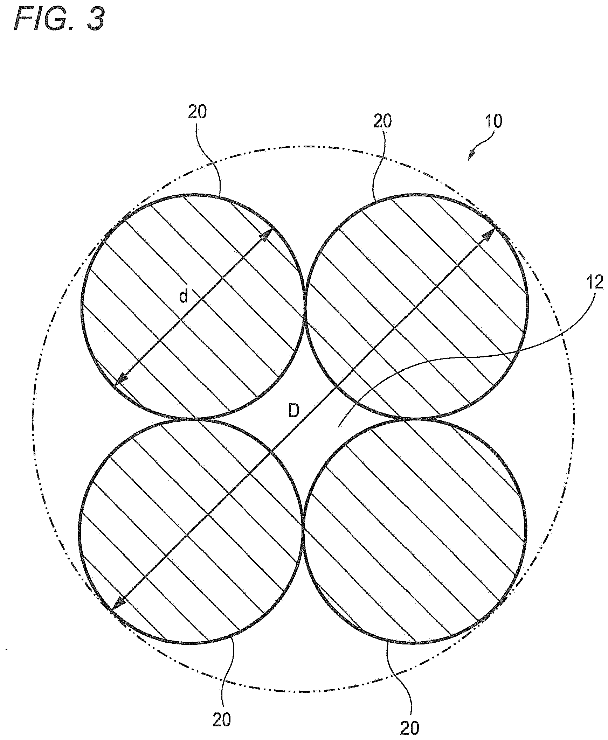

FIG. 3 is a cross sectional view of the steel cord 10, at a cross section perpendicular to the longitudinal direction of the steel cord 10. As illustrated in FIG. 3, the steel cord 10 is formed by stranding 4 filaments 20. The filaments 20 are stranded to the 1x4 structure. The 4 filaments 20 are spirally stranded to form a single steel cord 10.

In FIG. 3, a two-dot chain line indicates a virtual circumscribed circle of the steel cord 10. As illustrated in FIG. 3, the virtual circumscribed circle of the steel cord 10 refers to a virtual circle by which outer peripheries of the 4 filaments 20 are inscribed. In FIG. 2, a virtual circumscribed circle of the steel cord 10 is illustrated as a line representing the steel cord 10.

A diameter of this virtual circumscribed circle of the steel cord 10 may have values that are respectively different at a plurality of positions along the longitudinal direction of the steel cord 10. When the cross section illustrated in FIG. 3 is viewed at the plurality of positions along the longitudinal direction of the steel cord 10, mutual positions of the filaments 20 may be different. In this case, the diameter of the virtual circumscribed circle may be different at the respective cross sections. For this reason, the diameter of the virtual circumscribed circle is measured at the plurality of positions along the longitudinal direction, and an average value of the measured diameters is referred to as an average diameter D of the virtual circumscribed circle of the steel cord 10.

For example, a value that is measured by pinching the 4 filaments 20 by a micrometer, may be regarded as the diameter of the virtual circumscribed circle. In this specification, the diameter of the virtual circumscribed circle is measured by the micrometer at 5 positions along the longitudinal direction, and the average value of the measured diameters is regarded to as the average diameter D of the virtual circumscribed circle of the steel cord 10.

The average diameter D of the virtual circumscribed circle of the steel cord 10 having the 1x4 structure is preferably 0.2 mm or greater and 1.5 mm or less. When the average diameter D is less than 0.2 mm, it is difficult to sufficiently secure the strength of the steel cord 10. When the average diameter D is greater than 1.5 mm, the rigidity of the steel cord 10 becomes too high, and the performance of the tire 10 deteriorates.

The average diameter D is preferably 0.3 mm or greater and 1.2 or less.

As illustrated in FIG. 3, In the cross sectional view on a plane perpendicular to the longitudinal direction of the steel cord 10, the rubber 11 is preferably filled into a center part 12 surrounded by the 4 filaments 20.

In addition to portions of the filaments 20 positioned on the outer peripheral side of the steel cord 10, because the gaps among the filaments 20 are also filled by the rubber 11, the filaments 20 uneasily contact moisture, and rusting of the filaments 20 can be reduced. In addition, because a large contact area can be secured between the filaments 20 and the rubber, a sufficient adhesion can be secured.

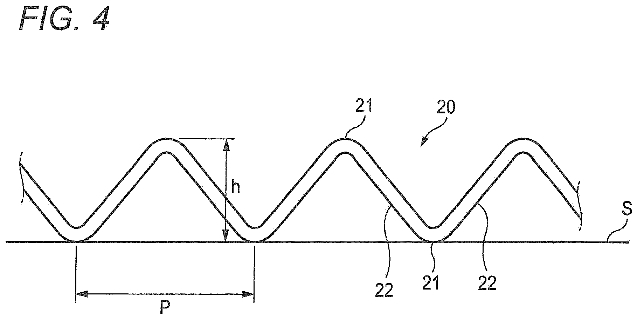

FIG. 4 is a diagram schematically illustrating the filament 20. As illustrated in FIG. 4, among the 4 filaments 20, at least 1 filament 20 is preferably formed with a bent part and a non-bent part repeatedly along the longitudinal direction of the 1 filament 20. The filament 20 includes a bent part 21 and a non-bent part 22 that are alternately and repeatedly formed along the longitudinal direction. The bent part and the non-bent part are preferably formed on the filament 20 before the filaments 20 are stranded.

Gaps can be formed between the filaments 20 by the bent part 21 and the non-bent part 22. The rubber 11 can easily be caused to enter the center part surrounded by the filaments 20 through these gaps, and the rubber 11 can easily be filled into the center part surrounded by the filaments 20.

As illustrated in FIG. 4, a length from the bent part 21 to the adjacent bent part 21 along the longitudinal direction is referred to as a repetition pitch P of the bent part and the non-bent part. This repetition pitch P of the filament 20 is preferably 2.2 mm or greater and 7.0 mm or less. When an attempt is made to make the repetition pitch P less than 2.2 mm, it becomes difficult to form the bent part 21 and the non-bent part 22, and the effect of causing the rubber 11 to enter the gaps between the filaments 20 deteriorates. When an attempt is made to make the repetition pitch P greater than 7.0 mm, a large-scale machine becomes required to form the bent part 21 and the non-bent part 22, and the production cost increases.

The repetition pitch P of the filament 20 is preferably 3.0 mm or greater and 7.0 mm or less. The repetition pitch P of the filament 20 is more preferably 3.0 mm or greater and 5.0 mm or less.

As illustrated in FIG. 4, when the filament 20 is placed on a plane S, and a height of the filament 20 from the plane S to the bent part 21 on a far end of the plane S is defined as a bent height h, the bent height h is preferably 0.2 times or more and 0.8 times or less with respect to the diameter of the filament 20.

When the bent height h is less than 0.2 times the filament diameter, it is difficult to secure the gaps by the bent part 21 and the non-bent part 22, and the effect of causing the rubber 11 to enter the mutual gaps between the plurality of filaments 20 deteriorates. When an attempt is made to make the bent height h more than 0.8 times the filament diameter, the bent part 21 may damage other filaments 20 when the filaments 20 are mutually stranded, and breaking of the filament may occur.

The bent height h of the filament 20 is preferably 0.25 times or more and 0.5 times or less with respect to the filament diameter. The bent height h of the filament 20 is more preferably 0.3 times or more and 0.5 times or less with respect to the filament diameter.

For the purpose of achieving weight saving and cost reduction, the smaller the number of filaments 20 forming the steel cord 10, the better. However, when the number of filaments 20 is small, the cord strength or the like becomes insufficient, and it becomes difficult to secure a satisfactory steering stability. For example, it is not realistic to form the steel cord 10 using 1 or 2 filaments 20.

Accordingly, the present inventors examined forming the steel cord using 3 or more filaments 20 for the purpose of securing the cord strength, and using 5 or less filaments 20 for the purpose of weight saving and cost reduction. When forming the steel cord using 3 or more and 5 or less filaments 20, steel cords having 1x3, 1x4, 1x5, 2+1, and 2+2 structures are conceivable.

The present inventors repeated further examinations of the steel cords having these structures.

The steel cord having the 1x3 structure includes 3 filaments, and the steel cord can easily be formed at a low cost. However, compared to the structure using 4 or 5 filaments, a bending rigidity becomes high, and a satisfactory steering stability is difficult to obtain. For this reason, it is conceivable to increase the cord strength using thin filaments, however, as a result of the machining ratio of the filaments becoming high, it becomes difficult to manufacture the steel cord by stranding the filaments.

FIG. 4 is a diagram illustrating a steel cord 110 having the 1x5 structure. The steel cord 110 having the 1x5 structure includes 5 filaments 20, and the steel cord 110 having a low bending rigidity can easily be formed. However, compared to the structure using 3 or 4 filaments 20, the cost more easily increases because of the large number of filaments 20 that are used.

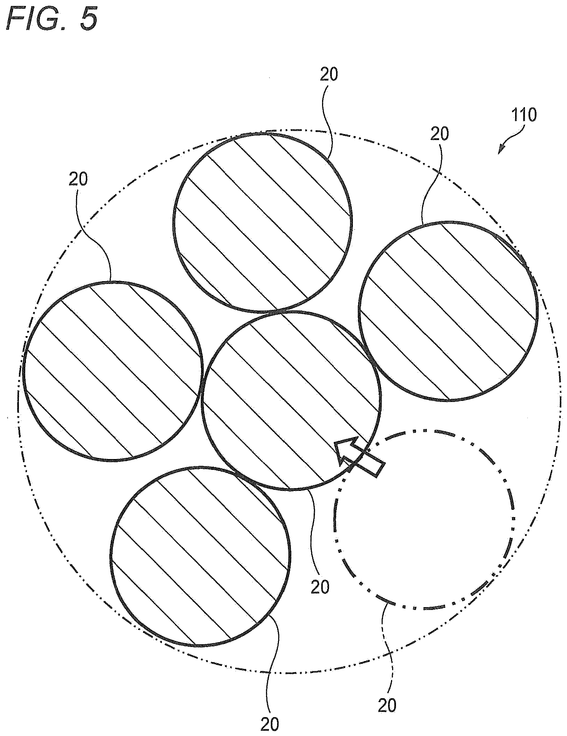

Furthermore, in the cross section perpendicular to the longitudinal direction of the steel cord 110, the filaments 20 may be unevenly arranged. Conceivably, even if the steel cord 110 can be manufactured so that the filaments 20 are evenly distributed, it is difficult to maintain the positions of the filaments 20 as they are. For example, as illustrated in FIG. 5, 1 filament 20 among the 5 filaments 20 may be arranged closer to the center. Hence, when such a deviation of the filaments 20 occur in the cross section, the average diameter of the steel cord 110 no longer becomes uniform along the longitudinal direction, to cause adverse effects on the tire performance.

In addition, as illustrated in FIG. 5, in the steel cord 110 having the 1x5 structure, large gaps are inevitably formed between the 5 filaments 20. For this reason, it is difficult to reduce a ratio of the cord diameter with respect to the cross sectional area of the filament 20. Hence, it is difficult to reduce the weight while maintaining the required strength of the steel cord.

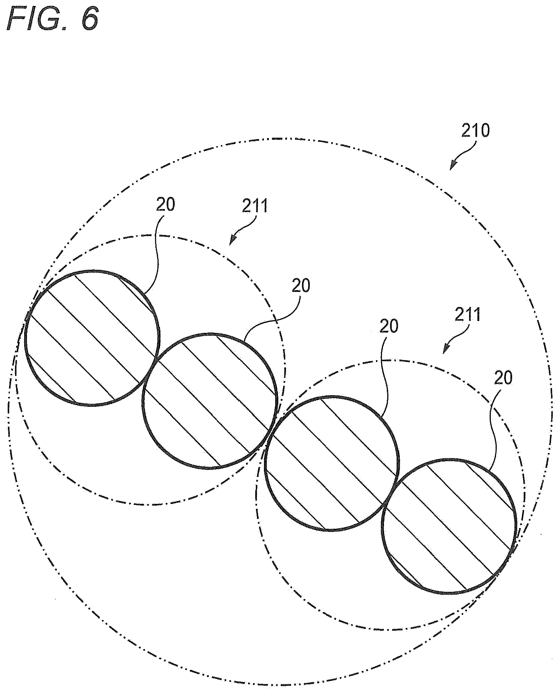

FIG. 6 is a diagram illustrating a steel cord 210 having the 2+2 structure. The steel cord 210 having the 2+2 structure includes 2 filament pairs 211 that are stranded, where the filament pair 211 includes 2 filaments that are stranded. The cord strength and the cost of the steel cord 210 having the 2+2 structure are well balanced. However, in the case of the steel cord 210 having the 2+2 structure, the filaments 20 are easily arranged unevenly in the cross section perpendicular to the longitudinal direction of the steel cord 210. For example, as illustrated in FIG. 6, in this cross section, the filaments 20 may be arranged in a straight line along the radial direction. When the filaments 20 are arranged unevenly in the cross section, the average diameter of the steel cord 210 no longer becomes uniform along the longitudinal direction, to cause adverse effects on the tire performance.

In addition, as illustrated in FIG. 6, in the steel cord 210 having the 2+2 structure, large gaps are inevitably formed between the 4 filaments 20. For this reason, it is difficult to reduce the ratio of the cord diameter with respect to the cross sectional area of the filament 20. Hence, it is difficult to reduce the weight while maintaining the required strength of the steel cord.

The cord strength and the cost of the steel cord 10 having the 1x4 structure are well balanced, and it is possible to easily reduce the weight while maintaining the required strength of the steel cord. Moreover, as illustrated in FIG. 3, in the cross section perpendicular to the longitudinal direction of the steel cord 10, the filaments 20 are evenly arranged. In addition, as illustrated in FIG. 3, the gaps formed between the 4 filaments 20 are small. For this reason, the ratio of the cord diameter with respect to the cross sectional area of the filament 20 can easily be increased. Hence, it is possible to easily reduce the weight while maintaining the required strength of the steel cord. Furthermore, this shape of the steel cord can easily be maintained. For this reason, the average diameter of the steel cord 10 along the longitudinal direction easily becomes uniform, and the performance of the tire 1 becomes high.

As a result of considering the above, the present inventors discovered that the low cost, weight saving, and steering stability are well balanced for the steel cord 10 having the 1x4 structure.

In addition, a CP (Cornering Power) value is known as an index of the tire performance. As a result of various research, the present inventors discovered that the tensile rigidity of the steel cord 10, and the interface rigidity between the adjacent belt layers 7, have a strong correlation to the CP value. Hence, the present inventors obtained an even better balance between the tire performance and the cost of the tire 1 using the steel cord 10 having the 1x4 structure.

### <Tensile Rigidity>

When the steel cord 10 is set on the tensile strength tester, and the steel cord 10 is pulled at a velocity of 5 mm/minute with a chuck distance of 500 mm, a value which is obtained by dividing a stress [N] applied to the steel cord 10 when a distortion of 0.1% is added to the steel cord, by the distortion of 0.1% at that time, is defined as a tensile rigidity [N/%]. When a tensile test of the steel cord 10 is performed, and a stress-strain diagram is obtained, a slope in the stress-strain diagram at a time when the distortion of 0.1% is obtained corresponds to the tensile rigidity.

In other words, the tensile rigidity of the steel cord 10 is an index indicating an inelasticity of the steel cord 10 when the steel cord 10 is pulled. In the case of the tire 1, the tensile rigidity may be regarded as an index related to the inelasticity of the tire 1 in the circumferential direction thereof.

The diameter of the filament 20 forming the steel cord 10, the repetition pitch P of the filament 20, an elongation of the filament 20 when applied with a low load, or the like may be regarded as main influencing factors of the tensile rigidity. Hence, by varying each of the influencing factors, samples 1-4 of the steel cord 10 having mutually different tensile rigidities were obtained, and as illustrated in Table 1, the tensile rigidity and the CP value were obtained. The tires 1 having the same specification except for the steel cord 10 were manufactured, and the CP values of these tires 1 were compared.

The CP value that is obtained when the tire 1 is manufactured using the steel cord 10 of the sample 2, is set to 100, and the CP values of the samples 1, 3, and 4 were indicated using relative indexes. It is known that the steel cord 10 of the sample 2 can obtain a high CP value by using a large number of thin filaments 20, however, the cost is high.

**Table 1**

| Sample Name | Structure Name | Wire Diameter | Number of Wires | Repetition Pitch | Low-Load Elongation | Tensile Rigidity | GP Value |
|---|---|---|---|---|---|---|---|
| | | (mm) | (Wires) | (mm) | (%) | (N/%) | (Index) |
| Sample 1 | 1×12 | 0.15 | 12 | 10.0 | 0.5 | 325 | 99 |
| Sample 2 | 2+7 | 0.18 | 9 | 15.0 | 0.3 | 341 | 100 |
| Sample 3 | 1×5 | 0.20 | 5 | 9.0 | 0.2 | 316 | 98 |
| Sample 4 | 2+2 | 0.23 | 4 | 13.0 | 0.2 | 315 | 98 |

In Table 1, a structure name is the name of the stranded structure of the steel cord 10.

1x12 refers to a structure in which 12 filaments 20 are stranded altogether.

2+7 refers to a structure in which a total of 9 filaments 20 are stranded, so that 2 filaments 20 are positioned at the center, and 7 filaments are positioned around the 2 filaments 20.

1x5 refers to a structure in which 5 filaments 20 are stranded altogether.

2+2 refers to a structure in which a total of 4 filaments 20 are stranded, so that 2 filaments 20 are positioned at the center, and 2 filaments 20 are positioned around the 2 filaments positioned at the center.

The sample 1 has the 1x12 structure, and is a steel cord in which 12 filaments having a diameter of 0.15 mm are stranded at a repetition pitch P of 10.0 mm. A low-load elongation of each filament is 0.5%. The low-load elongation refers to an elongation (distortion) [%] when 1 filament is pulled to a load of 49 N.

When the tensile test is performed on the steel cord of the sample 1 that is formed in this manner, the tensile rigidity was 325 N/%.

In addition, when a tire is manufactured using the steel cord of the sample 1, it was confirmed that the CP value is 99 when the CP value of the sample 2 is 100.

The sample 2 has the 2+7 structure, and is a steel cord in which 9 filaments having a diameter of 0.18 mm are stranded at a repetition pitch P of 15.0 mm. The low-load elongation of each filament is 0.3%.

When the tensile test is performed on the steel cord of the sample 2 that is formed in this manner, the tensile rigidity was 341 N/%.

The sample 3 has the 1x5 structure, and is a steel cord in which 5 filaments having a diameter of 0.20 mm are stranded at a repetition pitch P of 9.0 mm. The low-load elongation of each filament is 0.2%.

When the tensile test is performed on the steel cord of the sample 3 that is formed in this manner, the tensile rigidity was 316 N/%.

In addition, when a tire is manufactured using the steel cord of the sample 3, it was confirmed that the CP value is 98 when the CP value of the sample 2 is 100.

The sample 4 has the 2+2 structure, and is a steel cord in which 4 filaments having a diameter of 0.23 mm are stranded at a repetition pitch P of 13.0 mm. The low-load elongation of each filament is 0.2%.

When the tensile test is performed on the steel cord of the sample 4 that is formed in this manner, the tensile rigidity was 315 N/%.

In addition, when a tire is manufactured using the steel cord of the sample 4, it was confirmed that the CP value is 98 when the CP value of the sample 2 is 100.

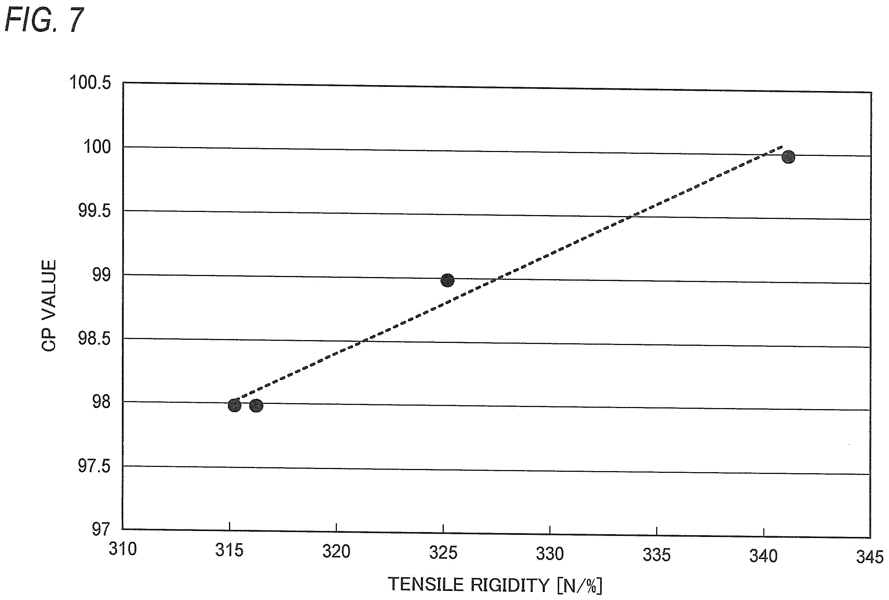

FIG. 7 illustrates a relationship between the tensile rigidity and the CP value, by taking the tensile strength obtained in Table 1 along the abscissa, and taking the CP value along the ordinate. As illustrated in FIG. 7, it was confirmed that the tensile rigidity and the CP value have a strong correlation of direct proportion. In other words, it was confirmed that, as the tensile rigidity becomes higher, the CP value that is obtained becomes higher.

### <Interface Rigidity>

A ratio of a shear force [N] with respect to a shear strain [mm] when the shear force is caused to act between the adjacent belt layers 7, is defined as the interface rigidity [Pa]. The shear strain is measured using a portion that is cut out to a size of 5 cm square when viewed in a plan view of the two laminated belt layers 7.

For example, in FIG. 2, when steel cord 10 of the upper belt layer 7 is pulled in a front direction perpendicular to a paper surface, and the steel cord 10 of the lower belt layer 7 is pulled to a back side perpendicular to the paper surface of the figure, a shear force is generated between the upper belt layer 7 and the lower belt layer 7, and a shear strain occurs. A magnitude [N] of the shear force with respect to a magnitude [mm] of the shear strain when the shear distortion is 10% to 20%, is defined as the interface rigidity [Pa]. In other words, the interface rigidity is an index indicating a difficult of causing strain to the adjacent belt layers 7 when the shear force acts on the adjacent belt layers 7.

The interface rigidity in the case of the tire 1 may be regarded as an index related to the difficulty of causing strain to the belt layers 7 in an axle direction of the tire 1.

The rubber elastic modulus S* of the belt layer 7, and the center distance T (also referred to as a gauge thickness) of the steel cord 10 in the adjacent belt layers 7 may be regarded as main influencing factors of the interface rigidity.

The center distance T, as illustrated in FIG. 2, is the distance between centers 10c of the steel cords 10 of the adjacent belt layers 7 along the radial direction of the tire 1. The center distance T is preferably 0.4 mm or greater and 1.6 mm or less. When the center distance T is less than 0.4 mm, the amount of rubber filling between the cords becomes small, and the durability deteriorates. When the center distance T is greater than 1.6 mm, the weight of the tire increases. The preferable range for the center distance T is 0.5 mm or greater and 1.3 mm or less.

In addition, the rubber elastic modulus E* is an index indicating a viscoelasticity of rubber. The rubber elastic modulus may also be referred to as a complex modulus of elasticity or a dynamic viscoelasticity. In the following description, the rubber elastic modulus E* of the tire 1 refers to a numerical value that is measured using a spectrometer manufactured by Toyo Seiki Seisaku-sho, Ltd., for a small piece (test piece) of the tire 1, having a width of 5 mm, a thickness of 2mm, and a length of 20 mm, at an initial load of 150 g, a frequency of 50 Hz, a dynamic strain of 1%, and a temperature of 70°C.

The manufacturing cost of the steel cord 10 having the 1x12 structure and the 2+7 structure of the samples 1 and 2 in Table 1 becomes high. In addition, as described above, the lightweight properties and the steering stability are well-balanced for the steel cord 10 having the 1x4 structure. Hence, in the following, a relationship between the interface rigidity and the CP value was verified with respect to the steel cord 10 having the 1x4 structure.

Samples 5-8 of the tire, that use belt layers having mutually different interface rigidities, were obtained by manufacturing the belt layers with different types of rubber and gauge thicknesses T, using a steel cord having the 1x4 structure in which filaments having a low-load elongation of 0.13% and a diameter of 0.27 mm are stranded at a repetition pitch P of 15.5 mm, to obtain the interface rigidities and the CP values as illustrated in Table 2. The CP values are the values that are obtained when the tires are manufactured with the same specifications except for the belt layer and the steel cord. The CP values of the samples 5-7 in Table 2 indicate relative indexes when the CP value of the sample 8 is 100.

**Table 2**

| Sample Name | E* | Gauge Thickness | Interface Rigidity | CP Value |
|---|---|---|---|---|
| | (MPa) | (mm) | (MPa) | (Index) |
| Sample 5 | 5.5 | 1.10 | 2.4 | 97 |
| Sample 6 | 8.5 | 1.10 | 3.4 | 98 |
| Sample 7 | 8.5 | 0.86 | 4.1 | 99.5 |
| Sample 8 | 8.5 | 0.60 | 4.4 | 100 |

A rubber elastic modulus E* of 5.5 MPa, and a gauge thickness T of 1.10 mm were used for the tire of the sample 5. The tire of the sample 5 had an interface rigidity of 2.4 MPa, and a CP value of the tire of the sample 5 was 97 when the CP value of the sample 8 is 100.

A rubber elastic modulus E* of 8.5 MPa, and a gauge thickness T of 1.10 mm were used for the tire of the sample 6. The tire of the sample 6 had an interface rigidity of 3.4 MPa, and a CP value of the tire of the sample 6 was 98 when the CP value of the sample 8 is 100.

A rubber elastic modulus E* of 8.5 MPa, and a gauge thickness T of 0.86 mm were used for the tire of the sample 7. The tire of the sample 7 had an interface rigidity of 4.1 MPa, and a CP value of the tire of the sample 7 was 99.5 when the CP value of the sample 8 is 100.

A rubber elastic modulus E* of 8.5 MPa, and a gauge thickness T of 0.60 mm were used for the tire of the sample 8. The tire of the sample 8 had an interface rigidity of 4.4 MPa.

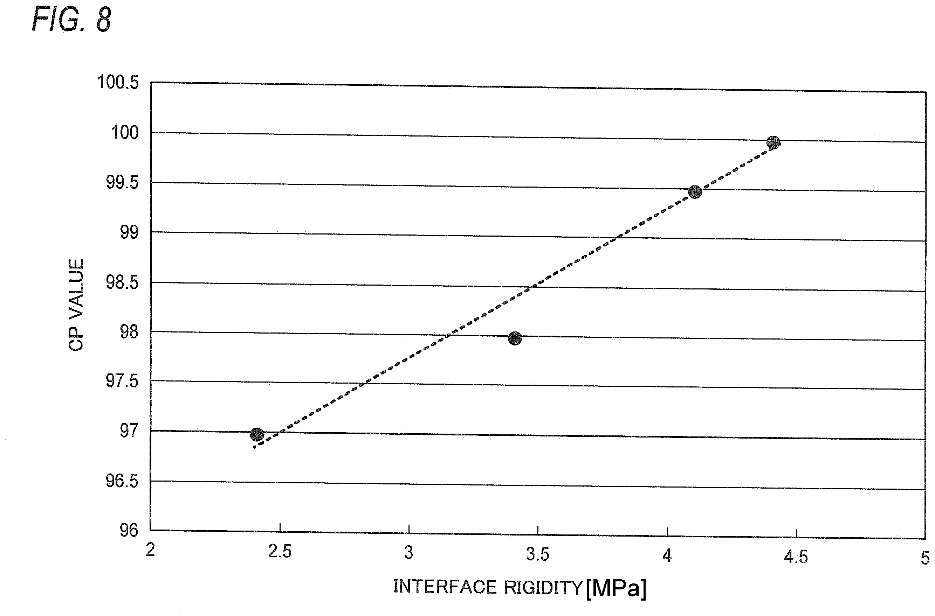

FIG. 8 illustrates a relationship between the interface rigidity and the CP value, by taking the interface strength obtained in Table 2 along the abscissa, and taking the CP value along the ordinate. As illustrated in FIG. 8, it was confirmed that the interface rigidity and the CP value have a strong correlation of direct proportion. In other words, it was confirmed that, as the interface rigidity becomes higher, the CP value that is obtained becomes higher.

The present inventors discovered from the results of FIG. 7 and FIG. 8 that, as the tensile rigidity and/or the interface rigidity becomes higher, tires having higher CP values can be obtained. Hence, samples 9-13 of the tire having different tensile rigidities and interface rigidities were manufactured, and the CP values were obtained as illustrated in Table 3. The sample 9 is a reference example, and the samples 10-13 are exemplary implementations of the present invention.

**Table 3**

| Sample Name | Tensile Rigidity | Interface Rigidity | CP Value |
|---|---|---|---|
| | (N/%) | (MPa) | (Index) |
| Sample 9 | 15500 | 3.50 | 101 |
| Sample 10 | 16000 | 2.70 | 100 |
| Sample 11 | 16000 | 3.10 | 101 |
| Sample 12 | 13000 | 3.72 | 101 |
| Sample 13 | 13000 | 4.1 | 102 |

[Tensile rigidity] x [number of ends], the interface rigidity, and the CP value were examined for the samples 9-13. The CP value was represented as an index using the CP value of 100 for a reference tire. The reference tire used a steel cord having the 2+7 structure in which 9 filaments having a low-load elongation of 0.14% and a diameter of 0.18 mm are stranded at a repetition pitch P of 13.0 mm, and a T/D value, obtained by dividing the gauge thickness T (mm) by the average diameter D (mm) of the virtual circumscribed circle of the steel cord, was set to 2.00. When the tire is manufactured using the steel cord that uses a large number of such thin filaments, a high CP value is obtained, however, the cost is high. Hence, the samples 10-13 were manufactured to realize high-performance tires at a low cost.

The tire of the sample 9 that is the reference example was manufactured using a steel cord having the 2x7 structure in which 9 filaments having a low-load elongation of 0.14% and a diameter of 0.18 mm are stranded at a repetition pitch P of 8.0 mm. In addition, a rubber elastic modulus E* of 5.5 MPa was used for the tire of the sample 9, and a T/D value, obtained by dividing the gauge thickness T (mm) by the average diameter D (mm) of the virtual circumscribed circle of the steel cord, was set to 2.00.

The tire of the sample 9 had a [tensile rigidity] x [number of ends] of 15500 [N/%], and an interface rigidity of 3.50 [MPa], and the CP value was 101.

The tire of the sample 10 that is an exemplary implementation was manufactured using a steel cord having the 1x4 structure in which 4 filaments having a low-load elongation of 0.13% and a diameter of 0.27 mm are stranded at a repetition pitch P of 15.5 mm. In addition, a rubber elastic modulus E* of 5.5 MPa was used for the tire of the sample 10, and a T/D value, obtained by dividing the gauge thickness T (mm) by the average diameter D (mm) of the virtual circumscribed circle of the steel cord, was set to 1.90.

The tire of the sample 10 had a [tensile rigidity] x [number of ends] of 16000 [N/%], and an interface rigidity of 2.70 [MPa], and the CP value was 100.

The tire of the sample 11 that is an exemplary implementation was manufactured using a steel cord having the 1x4 structure in which 4 filaments having a low-load elongation of 0.13% and a diameter of 0.27 mm are stranded at a repetition pitch P of 15.5 mm. In addition, a rubber elastic modulus E* of 8.5 MPa was used for the tire of the sample 11, and a T/D value, obtained by dividing the gauge thickness T (mm) by the average diameter D (mm) of the virtual circumscribed circle of the steel cord, was set to 1.85.

The tire of the sample 11 had a [tensile rigidity] x [number of ends] of 16000 [N/%], and an interface rigidity of 3.10 [MPa], and the CP value was 101.

The tire of the sample 12 that is an exemplary implementation was manufactured using a steel cord having the 1x4 structure in which 4 filaments having a low-load elongation of 0.16% and a diameter of 0.22 mm are stranded at a repetition pitch P of 14.5 mm. In addition, a rubber elastic modulus E* of 8.5 MPa was used for the tire of the sample 12, and a T/D value, obtained by dividing the gauge thickness T (mm) by the average diameter D (mm) of the virtual circumscribed circle of the steel cord, was set to 2.10.

The tire of the sample 12 had a [tensile rigidity] x [number of ends] of 13000 [N/%], and an interface rigidity of 3.72 [MPa], and the CP value was 101.

The tire of the sample 13 that is an exemplary implementation was manufactured using a steel cord having the 1x4 structure in which 4 filaments having a low-load elongation of 0.16% and a diameter of 0.22 mm are stranded at a repetition pitch P of 14.5 mm. In addition, a rubber elastic modulus E* of 8.5 MPa was used for the tire of the sample 13, and a T/D value, obtained by dividing the gauge thickness T (mm) by the average diameter D (mm) of the virtual circumscribed circle of the steel cord, was set to 1.70.

The tire of the sample 13 had a [tensile rigidity] x [number of ends] of 13000 [N/%], and an interface rigidity of 4.1 [MPa], and the CP value was 102.

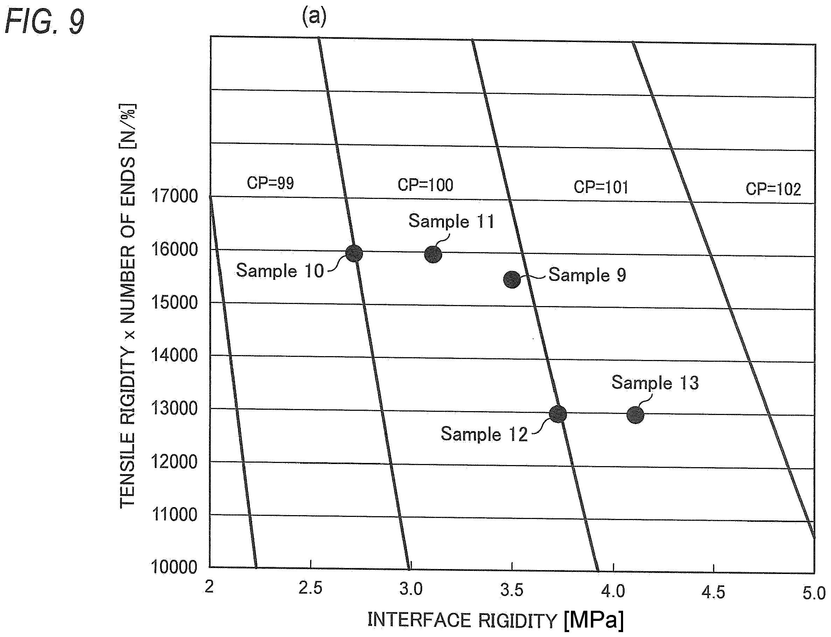

Based on the result of Table 3, FIG. 9 illustrates a relationship of a multiplier of the tensile rigidity and the number of ends, the interface rigidity, and the CP value. In FIG. 9, the ordinate indicates the multiplier of the tensile rigidity and the number of ends, and the abscissa indicates the interface rigidity. The tensile rigidity receives the effects of the number of ends within the actual tire 1. This is because, even if the tensile rigidity is low, the strength of the tire 1 becomes large as long as the number of ends is sufficiently large. Hence, in FIG. 9, the multiplier of the tensile rigidity and the number of ends is indicated along the ordinate. The number of ends refers to the number of steel cords 10 existing per width of 5 cm of the belt layer 7, at a cross section (cross section illustrated in FIG. 2) perpendicular to the direction in which the steel cords 10 extend.

Contour lines of the CP values may be drawn in FIG. 9. A line (a) is a boundary line where the CP value becomes 100 or greater. In FIG. 9, the CP value has a tendency to become larger towards the upper right, and to become smaller towards the lower left.

From the above results, it was confirmed that a tire having a high tire performance can be manufactured using the low-cost steel cord 10 having the 1x4 structure, when [tensile rigidity] x [number of ends] is 10,000 N/% or greater and 20,000 N/% or less, and the interface rigidity is 2.5 MPa or greater and 5.0 MPa or less, as in the case of the samples 10-13. The tire in accordance with the present invention has a performance that is the same or higher than those of the high-cost high-performance tires.

When [tensile rigidity] x [number of ends] is less than 10,000 N/%, the CP value that is obtained is low, and a sufficient tire performance cannot be obtained. When [tensile rigidity] x [number of ends] is greater than 20,000 N/%, the manufacturing cost becomes too high and unrealistic. The tire performance and the cost are well-balanced and preferable when [tensile rigidity] x [number of ends] is 13,000 N/% or greater and 16,000 N/% or less.

When the interface rigidity is lower than 2.5 MPa, the CP value that is obtained is low, and a sufficient tire performance cannot be obtained. When the interface rigidity is higher than 5.0 MPa, the manufacturing cost becomes too high and unrealistic. The tire performance and the cost are well-balanced and preferable when the interface rigidity is 3.5 MPa or higher and 4.5 MPa or lower.

The number of ends is preferably 20 or greater and 60 or less. When the number of ends is less than 20, the number of steel cords 10 with respect to the tire 1 becomes too small, and a sufficient tire strength is difficult to obtain. When the number of ends is greater than 60, a large number steel cords 10 is required, and the productivity of the tire 10 greatly deteriorates.

The diameter of the filament 20 is preferably 0.18 mm or greater and 0.42 mm or less.

When the diameter of the filament 20 is less than 0.18 mm, a large number of steel cords 10 is required in order to obtain the required tensile rigidity, and the cost becomes high. When the diameter of the filament 20 is greater than 0.42 mm, the processes become difficult when stranding the filaments 20, and the production cost of the tire 1 becomes high.

The tensile strength of the filament 20 is preferably 100 N or greater and 450 N or less. The tensile strength of the filament 20 is more preferably 130 N or greater and 420 N or less. The tensile strength of the filament 20 is a ratio of a tensile force [N] with respect to a distortion [%] when a tensile test is performed on the filament 20.

When the tensile strength of the filament 20 is less than 100 N, the number of ends for obtaining the required tire strength becomes large, and the productivity of the tire 1 deteriorates. When the tensile strength of the filament 20 is greater than 450 N, it becomes difficult to process the filament 20, and the productivity of the tire 1 deteriorates.

Further, in the embodiment described above, the present inventors discovered that the steering stability can be improved further when the T/D value is 1.2 or greater and 2.25 or less, where the center distance of the steel cords 10 in the two belt layers 7 that are adjacent along the radial direction is denoted by T, and the average diameter of the virtual circumscribed circle of the steel cord 10 having the 1x4 structure is denoted by D. Details of the discovery are described below.

Steel cords having the 1x4 structure were manufactured using filaments having the same diameter and formed with the bent part and the non-bent part in the same way, and the T/D value that is a ratio of the center distance T of the steel cords 10 in the two belt layers 7 that are adjacent along the radial direction, and the average diameter D of the virtual circumscribed circle of the steel cord 10 having the 1x4 structure, were set to various values, to manufacture and evaluate tires of the following exemplary implementations 21-27 and comparison examples 21 and 22.

### Exemplary Implementation 21:

The steel cord having the 1x4 structure was manufactured using filaments having the diameter of 0.30 mm. The bent part and the non-bent part were formed in 1 of the 4 filaments, so that the repetition pitch is 3.0 mm and the bent height is 0.5 times the diameter of the filament. The average diameter D of the virtual circumscribed circle of the steel cord having the 1x4 structure was 0.72 mm.

The belt layer was formed using this steel cord, to manufacture a tire of the exemplary implementation 21. The center distance T of the cords was set to 1.47 mm. The T/D value of the exemplary implementation 21 was 2.04.

### Exemplary Implementation 22:

The belt layer was formed using the steel cord manufactured for the exemplary implementation 21, to manufacture a tire of the exemplary implementation 22. The center distance T of the cords was set to 1.30 mm. The T/D value of the exemplary implementation 22 was 1.81.

### Exemplary Implementation 23:

The belt layer was formed using the steel cord manufactured for the exemplary implementation 21, to manufacture a tire of the exemplary implementation 23. The center distance T of the cords was set to 1.27 mm. The T/D value of the exemplary implementation 23 was 1.77.

### Exemplary Implementation 24:

The belt layer was formed using the steel cord manufactured for the exemplary implementation 21, to manufacture a tire of the exemplary implementation 24. The center distance T of the cords was set to 1.13 mm. The T/D value of the exemplary implementation 24 was 1.57.

### Exemplary Implementation 25:

The belt layer was formed using the steel cord manufactured for the exemplary implementation 21, to manufacture a tire of the exemplary implementation 25. The center distance T of the cords was set to 1.12 mm. The T/D value of the exemplary implementation 25 was 1.55.

### Exemplary Implementation 26:

The belt layer was formed using the steel cord manufactured for the exemplary implementation 21, to manufacture a tire of the exemplary implementation 26. The center distance T of the cords was set to 0.99 mm. The T/D value of the exemplary implementation 26 was 1.38.

### Exemplary Implementation 27:

The belt layer was formed using the steel cord manufactured for the exemplary implementation 21, to manufacture a tire of the exemplary implementation 27. The center distance T of the cords was set to 0.96 mm. The T/D value of the exemplary implementation 21 was 1.34.

### Comparison Example 21:

The belt layer was formed using the steel cord manufactured for the exemplary implementation 21, to manufacture a tire of the comparison example 21. The center distance T of the cords was set to 1.67 mm. The T/D value of the comparison example 21 was 2.32.

### Comparison Example 22:

The belt layer was formed using the steel cord manufactured for the exemplary implementation 21, to manufacture a tire of the comparison example 22. The center distance T of the cords was set to 0.83 mm. The T/D value of the comparison example 22 was 1.15.

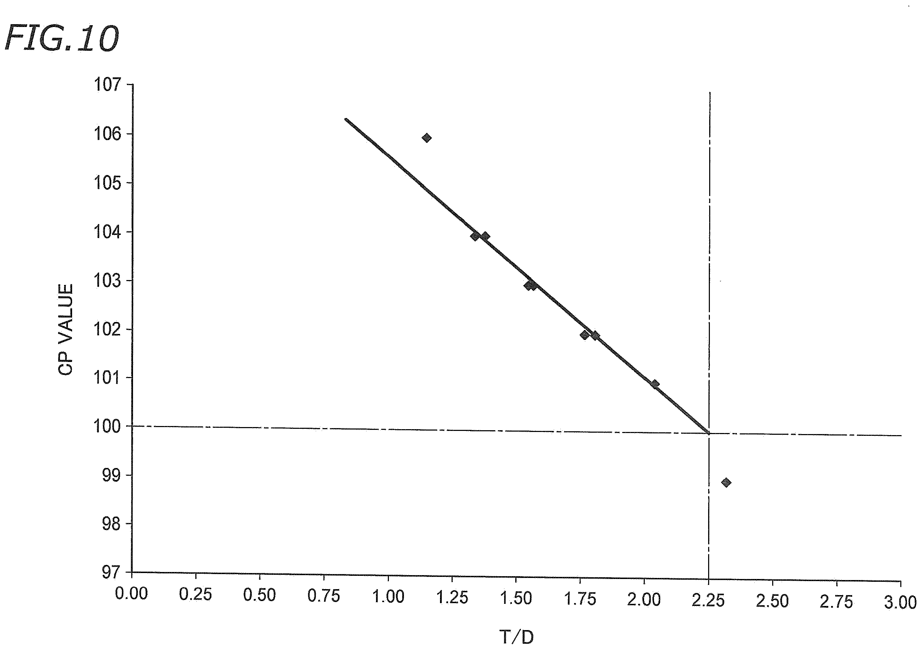

The CP (Cornering Power) values were measured for the ties of the exemplary implementations 21-27 and the comparison examples 21 and 22. Table 4 tabulates the average diameter D of the virtual circumscribed circle of the steel cord, the center distance T of the cords, the T/D value, and the CP value. FIG. 10 is a diagram illustrating a relationship of the T/D value and the CP value. In FIG. 10, the ordinate indicates the CP values according to the exemplary implementations 21-27 and the comparison examples 21 and 22, when the CP value for the case where the center distance T of the cords is 1.62 mm (T/D = 2.25) is 100.

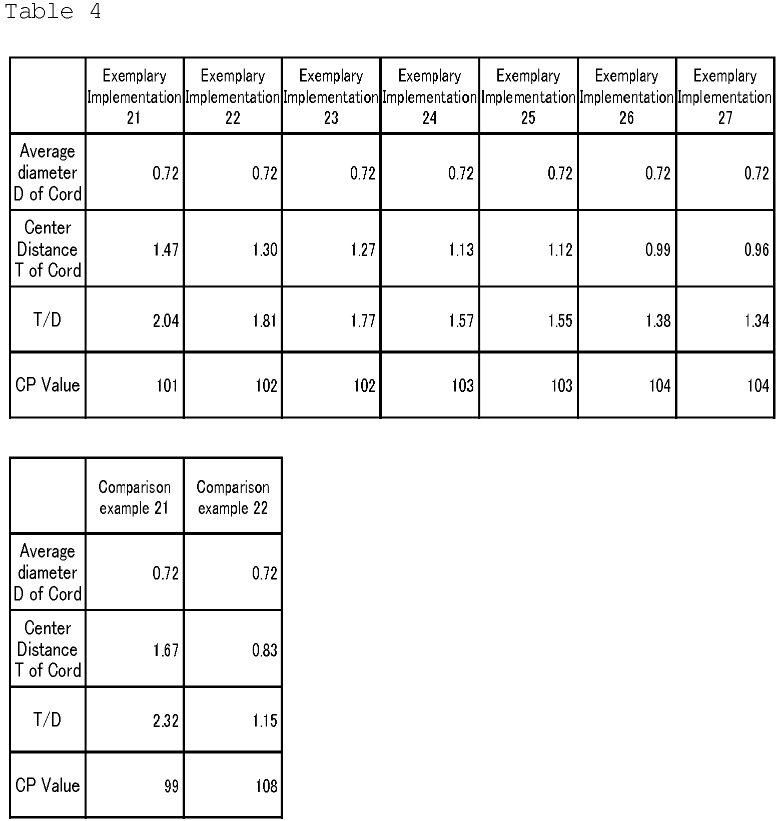

As illustrated in FIG. 10, the CP value becomes larger as the T/D value becomes smaller. In order to secure a comfortable steering stability, the larger the CP value, the better. From the results illustrated in FIG. 10, it was confirmed that, when the T/D value is larger than 2.25, the CP value in FIG. 10 is smaller than 100 and it is difficult to secure the comfortable steering stability, however, when the T/D value is 2.25 or less, the CP value becomes 100 or greater, and a more comfortable steering stability can be secured.

In a case where the average diameter D of the virtual circumscribed circle of the steel cords is constant, the T/D value becomes smaller as the center distance T of the cords becomes smaller. When the center distance T of the cords is small, it is possible to reduce the amount of rubber filled inbetween the steel cords adjacent along the radial direction. For this reason, the tire in accordance with the present invention can secure a comfortable steering stability, while reducing the amount of rubber and achieving weight saving. On the other hand, in a case where the center distance T of the cords is too small, there is a possibility that the steel cords will not be covered by the rubber, and thus, the durability deteriorates. Hence, the T/D value is set to 1.25 or greater.

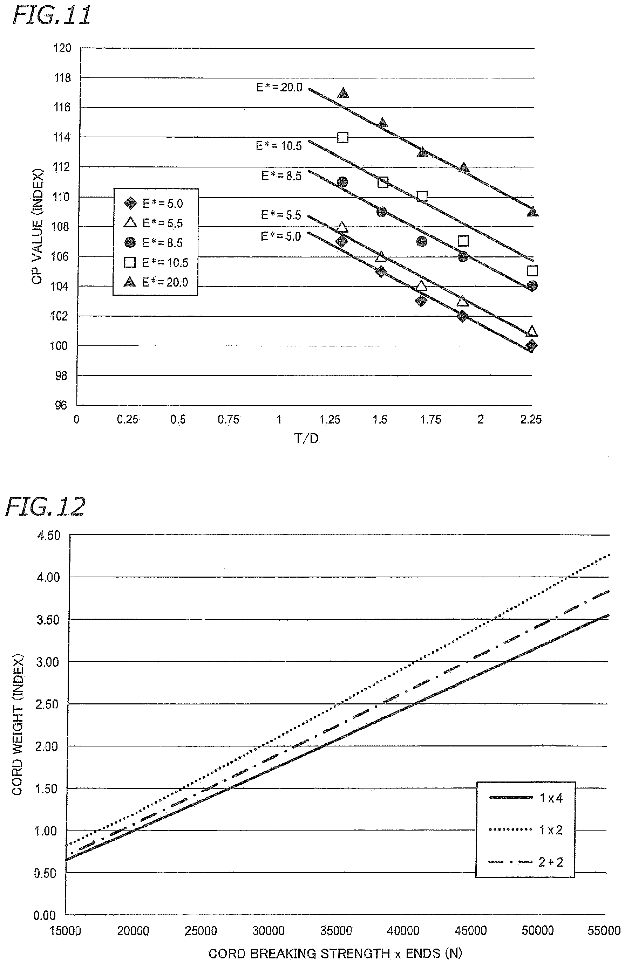

FIG. 11 is is a diagram illustrating a relationship of the T/D value, the CP value of the tire, and the value of the rubber elastic modulus E*. FIG. 11 illustrates a graph related to the rubber elastic modulus E* and the CP value.

As illustrated in FIG. 11, in a case where the CP value is 100 when E* is 5.0 MPa and T/D is 2.25, the CP value becomes larger when E* becomes larger. However, when the rubber elastic modulus E* is less than 5 MPa, the T/D value needs to be made small if the CP value of 100 or greater is to be secured, and it is difficult to secure the required rigidity for the tire. When the rubber elastic modulus E* is 20 MPa or greater, the CP value can easily be made large, however, the processes become difficult and the productivity greatly deteriorates.

A more preferable range for the rubber elastic modulus E* is 7 MPa or greater and 20 MPa or less, and a further preferable range is 8 MPa or greater and 12 MPa or less.

FIG. 12 is a diagram illustrating a relationship between an index obtained from a cord weight, and [cord breaking strength] x [number of ends]. The relationship between the index obtained from the cord weight, and [cord breaking strength] x [number of ends], is illustrated for each of the cord having the 1x4 structure, the cord having the 1x2 structure, and the cord having the 2+2 structure.

As illustrated in FIG. 12, in a case where a tire having [cord breaking strength] x [number of ends] of 30,000 N is desired, for example, the tire can be made the lightest when the cord having the 1x4 structure is used. The cords having the 1x4 structure, the 2+2 structure, and the 1x2 structure provide tires, in this ascending order of tire weight.

In addition, in a case where a tire having an index of the cord weight that is 2.50 is desired, for example, [cord breaking strength] x [number of ends] can be made the largest when the cord having the 1x4 structure is used. The cords having the 1x4 structure, the 2+2 structure, and the 1x2 structure provide tires, in this descending order of [cord breaking strength] x [number of ends].

For example, in a case where the required [cord breaking strength] x [number of ends] is the same, using the 1x4 structure can reduce the weight by approximately 10% compared to using the 1x2 structure, and by approximately 5% compared to using the 2+2 structure.

Accordingly, when cord having the 1x4 structure is used, it is possible to easily secure the required strength, while easily making a light-weight tire.

[Cord breaking strength] x [number of ends] is preferably 15,000 N or greater and 40,000 N or less. When [cord breaking strength] x [number of ends] is less than 15,000 N, the strength becomes insufficient, and the durability greatly deteriorates. When [cord breaking strength] x [number of ends] is greater than 40,000 N, the possibility that the steering stability will deteriorate becomes high. Desirably, [cord breaking strength] x [number of ends] is 18,000 N or greater and 37,000 N or less.

In the embodiments described above, the described tire has 2 belt layers, however, the present invention is not limited to such. The tire may have 3 belt layers, and at least 2 adjacent belt layers along the radial direction among the 3 belt layers may satisfy a relationship 1.25 <= T/D <= 2.25.

The tire in accordance with the present invention is applicable to automobile tires for passenger cars, ultralight trucks, light trucks, trucks, buses, or the like, aircraft tires, or the like.

### DESCRIPTION OF THE REFERENCE NUMERALS

1 Tire
2 Tread Part
3 Sidewall Part
4 Bead Part
5 Inner Liner
6 Carcass
7 Belt Layer
8 Bead Wire
10, 110, 210 Steel Cord
11 Rubber
12 Center Part
20 Filament
21 Bent Part
22 Non-Bent Part
h Bent Height
P Repetition Pitch
D Average Diameter of Virtual Circumscribed Circle of Steel Cords
T Center Distance

## Claims

1. A tire (1) having a plurality of belt layers (7) laminated in a radial direction, wherein each belt layer (7) includes a plurality of steel cords (10, 110, 210) arranged in parallel and aligned in a row, and a rubber (11) covering the plurality of steel cords (10, 110, 210),
wherein the plurality of steel cords (10, 110, 210) have a 1x4 structure in which 4 filaments (20) are stranded,
**characterized in that** a tensile rigidity [N/%] is defined as a value that is obtained when the steel cord (10, 110, 210) is set on a tensile strength tester and is pulled at a velocity of 5 mm/minute with a chuck distance of 500 mm, and a stress [N] on the steel cord (10, 110, 210) in a state where a distortion of 0.1% is applied to the steel cord (10, 110, 210) is divided by the applied distortion of 0.1%,
wherein a number of ends [-] is defined as a number of the plurality of steel cords (10, 110, 210) existing per width of 5 cm of each belt layer (7), at a cross section perpendicular to a direction in which the plurality of steel cords (10, 110, 210) extend,
wherein [tensile rigidity] x [number of ends] is 10,000 N/% or greater and 20,000 N/% or less, and
wherein an interface rigidity [MPa] is defined as a ratio of a magnitude [N] of a shear force with respect to a magnitude [mm] of a shear strain in a state where the shear force is caused to act between adjacent belt layers (7), and
wherein the interface rigidity is 2.5 MPa or higher and 5.0 MPa or lower.

2. The tire (1) as claimed in claim 1, wherein [tensile rigidity] x [number of ends] is 13,000 N/% or greater and 16,000 N/% or less.

3. The tire (1) as claimed in claim 1 or 2, wherein the interface rigidity is 3.5 MPa or higher and 4.5 MPa or lower.

4. The tire (1) as claimed in any one of claims 1 to 3, wherein the number of ends is 20 or greater and 60 or less.

5. The tire (1) as claimed in any one of claims 1 to 4, wherein a diameter of the filaments (20) is 0.18 mm or greater and 0.42 mm or less.

6. The tire (1) as claimed in any one of claims 1 to 5, wherein the tensile strength of the filaments (20) is 100 N or greater and 450 N or less.

7. The tire (1) as claimed in any one of claims 1 to 6, wherein
when a center distance of the steel cords (10, 110, 210) in at least two adjacent belt layers (7) along the radial direction is denoted by T, and an average diameter of a virtual circumscribed circle of the steel cords (10, 110, 210) in the 1x4 structure is denoted by D,
T/D is 1.25 or greater and 2.25 or less.

8. The tire (1) as claimed in claim 7, wherein the average diameter D is 0.2 mm or greater and 1.5 mm or less.

9. The tire (1) as claimed in claim 7 or 8, wherein the center distance T is 0.4 mm or greater and 1.6 mm or less.

10. The tire (1) as claimed in any one of claims 1 to 9, wherein the rubber elastic modulus E* of the tire (1) is 5 MPa or higher and 20 MPa or lower.

11. The tire (1) as claimed in any one of claims 1 to 10, wherein [cord breaking strength] x [number of ends] is 15,000 N or greater and 40,000 N or less.

12. The tire (1) as claimed in any one of claims 1 to 11, wherein, in a cross sectional view on a plane perpendicular to a longitudinal direction of the steel cords (10, 110, 210), the rubber (11) is filled into a center part surrounded by the 4 filaments (20).

13. The tire (1) as claimed in any one of claims 1 to 12, wherein among the 4 filaments (20), at least 1 filament (20) is formed with a bent part (21) and a non-bent part (22) repeatedly along the longitudinal direction of the 1 filament (20).

14. The tire (1) as claimed in claim 13, wherein a repetition pitch (p) of the bent part (21) and the non-bent part (22) of the filament (20) is 2.2 mm or greater and 7.0 mm or less.

15. The tire (1) as claimed in claim 13 or 14, wherein
when the filament (20) is placed on a plane, and a height of the filament (20) from this plane to the bent part (21) on a far end of this plane is defined as a bent height (h),
the bent height (h) is 0.2 times or more and 0.8 times or less with respect to a diameter of the filament (20) .

## Patentansprüche

1. Reifen (1) mit einer Vielzahl von Gürtelschichten (7), die in einer radialen Richtung laminiert sind, wobei jede Gürtelschicht (7) eine Vielzahl von Stahlcorden (10, 110, 210), die parallel angeordnet und in einer Reihe ausgerichtet sind, sowie einen Gummi (11) einschließt, der die Vielzahl von Stahlcorden (10, 110, 210) umhüllt, wobei die Vielzahl von Stahlcorden (10, 110, 210) eine 1x4-Struktur aufweisen, bei der vier Filamente (20) verseilt sind, **dadurch gekennzeichnet, dass** eine Zugsteifigkeit [N/%] als ein Wert definiert ist, der sich ergibt, wenn der Stahlcord (10, 110, 210) in eine Zugprüfmaschine gegeben wird und mit einer Geschwindigkeit von 5 mm/Minute mit einem Spannabstand (inter-chuck distance) von 500 mm gezogen wird, und eine Spannung [N] an dem Stahlcord (10, 110, 210) in einem Zustand, in dem eine Verformung von 0,1% auf den Stahlcord (10, 110, 210) aufgebracht wird, durch die aufgebrachte Verformung von 0,1% dividiert wird, wobei eine Anzahl von Enden [-] als eine Anzahl der Vielzahl von Stahlcorden (10, 110, 210), die pro 5 cm Breite jeder Gürtelschicht (7) vorhanden sind, in einem Querschnitt senkrecht zu einer Richtung definiert ist, in der sich die Vielzahl von Stahlcorden (10, 110, 210) erstreckt, wobei [Zugsteifigkeit] x [Anzahl von Enden] 10,000 N/% oder mehr und 20.000 N/% oder weniger beträgt, und eine GrenzflächenSteifigkeit [MPa] als ein Verhältnis eines Betrages [N] einer Scherkraft in Bezug auf einen Betrag [mm] einer Scherverformung in einem Zustand definiert ist, in dem die Scherkraft veranlasst wird, zwischen benachbarten Gürtelschichten (7) zu wirken, und
die Grenzflächensteifigkeit 2,5 MPa oder mehr und 5,0 MPa oder weniger beträgt.

2. Reifen (1) nach Anspruch 1, wobei [Zugsteifigkeit] x [Anzahl von Enden] 13.000 N/% oder mehr und 16.000 N/% oder weniger beträgt.

3. Reifen (1) nach Anspruch 1 oder 2, wobei die Grenzflächensteifigkeit 3,5 MPa oder mehr und 4,5 MPa oder weniger beträgt.

4. Reifen (1) nach einem der Ansprüche 1 bis 3, wobei die Anzahl von Enden 20 oder mehr und 60 oder weniger beträgt.

5. Reifen (1) nach einem der Ansprüche 1 bis 4, wobei ein Durchmesser der Filamente (20) 0,18 oder mehr und 0,42 oder weniger beträgt.

6. Reifen (1) nach einem der Ansprüche 1 bis 5, wobei die Zugfestigkeit der Filamente (20) 100 N oder mehr und 450 N oder weniger beträgt.

7. Reifen (1) nach einem der Ansprüche 1 bis 6, wobei,
wenn ein Mittenabstand der Stahlcorden (10, 110, 210) in wenigstens zwei benachbarten Gürtelschichten (7) in der radialen Richtung mit T bezeichnet wird, und ein mittlerer Durchmesser eines virtuellen umbeschriebenen Kreises der Stahlcorden (10, 110, 210) in der 1x4-Struktur mit D bezeichnet wird,
T/D 1,25 oder mehr und 2,25 oder weniger beträgt.

8. Reifen (1) nach Anspruch 7, wobei der mittlere Durchmesser D 0,2 mm oder mehr und 1,5 mm oder weniger beträgt.

9. Reifen (1) nach Anspruch 7 oder 8, wobei der Mittenabstand T 0,4 mm oder mehr und 1,6 mm oder weniger beträgt.

10. Reifen (1) nach einem der Ansprüche 1 bis 9, wobei der Gummi-Elastizitätsmodul E* des Reifens (1) 5 MPa oder mehr und 20 MPa oder weniger beträgt.

11. Reifen (1) nach einem der Ansprüche 1 bis 10, wobei
[Cord-Reißfestigkeit] x [Anzahl von Enden] 15.000 N oder mehr und 40.000 N oder weniger beträgt.

12. Reifen (1) nach einem der Ansprüche 1 bis 11, wobei in einer Querschnittsansicht in einer Ebene senkrecht zu einer Längsrichtung der Stahlcorden (10, 110, 210) der Gummi (11) in einen Mittelteil gefüllt ist, der von den vier Filamenten (20) umgeben ist.

13. Reifen (1) nach einem der Ansprüche 1 bis 12, wobei von den vier Filamenten (20) wenigstens ein Filament (20) wiederholt in der Längsrichtung des einen Filaments(20) mit einem gebogenen Teil (21) und einem nicht gebogenen Teil (22) versehen ist.

14. Reifen (1) nach Anspruch 13, wobei ein Wiederholungsabstand (p) des gebogenen Teils (21) und des nicht gebogenen Teils (22) des Filaments (20) 2,2 mm oder mehr und 7,0 mm oder weniger beträgt.

15. Reifen (1) nach Anspruch 13 oder 14, wobei
wenn das Filament (20) auf eine Ebene aufgelegt wird und eine Höhe des Filaments (20) von dieser Ebene bis zu dem gebogenen Teil (21) an einem entfernten Ende dieser Ebene als eine Biege-Höhe (h) definiert ist,
die Biege-Höhe (h) das 0,2-fache oder mehr und das 0,8-fache oder weniger in Bezug auf einen Durchmesser des Filaments (20) beträgt.

## Revendications

1. Pneu (1) présentant plusieurs couches de ceinture (7) stratifiées dans une direction radiale, dans lequel chaque couche de ceinture (7) inclut plusieurs câbles en acier (10, 110, 210) disposés parallèlement et alignés dans une rangée, et un caoutchouc (11) recouvrant les plusieurs câbles en acier (10, 110, 210),
dans lequel les plusieurs câbles en acier (10, 110, 210) présentent une structure 1x4 dans laquelle 4 filaments (20) sont mis en cordon,
**caractérisé en ce qu'**une rigidité de traction [N/%] est définie comme une valeur qui est obtenue lorsque le câble en acier (10, 110, 210) est fixé sur un dispositif de test de résistance à la traction et est tiré à une vitesse de 5 mm/minute avec une distance de serrage de 500 mm, et une contrainte [N] sur le câble en acier (10, 110, 210) dans un état où une déformation de 0,1 % est appliquée au câble en acier (10, 110, 210) est divisée par la déformation appliquée de 0,1 %,
dans lequel un nombre d'extrémités [-] est défini comme un nombre des plusieurs câbles en acier (10, 110, 210) existant par largeur de 5 cm de chaque couche de ceinture (7), sur une section transversale perpendiculaire à une direction dans laquelle les plusieurs câbles en acier (10, 110, 210) s'étendent,
dans lequel [rigidité de traction] x [nombre d'extrémités] est 10 000 N/% ou supérieur et 20 000 N/% ou inférieur, et
dans lequel une rigidité d'interface [MPa] est définie comme un rapport d'un ordre de grandeur [N] d'une force de cisaillement par rapport à un ordre de grandeur [mm] d'une contrainte de cisaillement dans un état où la force de cisaillement est amenée à agir entre des couches de ceinture adjacentes (7), et
dans lequel la rigidité d'interface est de 2,5 MPa ou supérieure et de 5,0 MPa ou inférieure.

2. Pneu (1) selon la revendication 1, dans lequel [rigidité de traction] x [nombre d'extrémités] est de 13 000 N/% ou supérieure et 16 000 N/% ou inférieure.

3. Pneu (1) selon la revendication 1 ou 2, dans lequel la rigidité d'interface est de 3,5 MPa ou supérieure et de 4,5 MPa ou inférieure.

4. Pneu (1) selon l'une quelconque des revendications 1 à 3, dans lequel le nombre d'extrémités est de 20 ou supérieur et de 60 ou inférieur.

5. Pneu (1) selon l'une quelconque des revendications 1 à 4, dans lequel un diamètre des filaments (20) est de 0,18 mm ou supérieur et de 0,42 mm ou inférieur.

6. Pneu (1) selon l'une quelconque des revendications 1 à 5, dans lequel la résistance à la traction des filaments (20) est de 100 N ou supérieure et de 450 N ou inférieure.

7. Pneu (1) selon l'une quelconque des revendications 1 à 6, dans lequel
lorsqu'une distance centrale des câbles en acier (10, 110, 210) dans au moins deux couches de ceinture adjacentes (7) le long de la direction radiale est indiquée par T, et un diamètre moyen d'un cercle circonscrit virtuel des câbles en acier (10, 110, 210) dans la structure 1x4 est indiqué par D,
T/D est de 1,25 ou supérieur et de 2,25 ou inférieur.

8. Pneu (1) selon la revendication 7, dans lequel le diamètre moyen D est de 0,2 mm ou supérieur et de 1,5 mm ou inférieur.

9. Pneu (1) selon la revendication 7 ou 8, dans lequel la distance centrale T est de 0,4 mm ou supérieure et de 1,6 mm ou inférieure.

10. Pneu (1) selon l'une quelconque des revendications 1 à 9, dans lequel le module élastique de caoutchouc E* du pneu (1) est de 5 MPa ou supérieur et de 20 MPa ou inférieur.

11. Pneu (1) selon l'une quelconque des revendications 1 à 10, dans lequel [résistance à la rupture de câble] x [nombre d'extrémités] est de 15 000 N ou supérieur et de 40 000 N ou inférieur.

12. Pneu (1) selon l'une quelconque des revendications 1 à 11, dans lequel, dans une vue en section transversale sur un plan perpendiculaire à une direction longitudinale des câbles en acier (10, 110, 210), le caoutchouc (11) est chargé dans une partie centrale entourée par les 4 filaments (20).

13. Pneu (1) selon l'une quelconque des revendications 1 à 12, dans lequel parmi les 4 filaments (20), au moins 1 filament (20) est formé avec une partie de courbure (21) et une partie de non-courbure (22) de manière répétitive le long de la direction longitudinale du 1 filament (20).

14. Pneu (1) selon la revendication 13, dans lequel un pas de répétition (p) de la partie de courbure (21) et la partie de non-courbure (22) du filament (20) est de 2,2 mm ou supérieur et de 7,0 mm ou inférieur.

15. Pneu (1) selon la revendication 13 ou 14, dans lequel
lorsque le filament (20) est placé sur un plan, et une hauteur du filament (20) à partir de ce plan jusqu'à la partie de courbure (21) sur une extrémité éloignée de ce plan est définie comme la hauteur de courbure (h),
la hauteur de courbure (h) est de 0,2 fois ou supérieure et de 0,8 fois ou inférieure par rapport à un diamètre du filament (20).
